# EUROPEAN PATENT APPLICATION

(11) **EP 4 804 632 A1**
(43) Date of publication of application: **09.09.2026**
(21) Application number: 25162248.6
(22) Date of filing: 07.03.2025
(51) Int. Cl.: H04W 48/10, H04B 7/185, H04W 84/06, H04W 48/16, H04W 84/00

(54) **SKIPPING READING OF MOBILITY-RELATED SYSTEM INFORMATION BROADCAST MESSAGE**

(71) Applicant: Nokia Technologies Oy, 02610 Espoo (FI)
(72) Inventor: WIGARD, Jeroen, 9270 Klarup (DK); LAURIDSEN, Mads, 9260 Gistrup (DK); LOU, Feifei, 81377 Munich (DE); MEDEIROS DE AMORIM, Rafhael, 9000 Aalborg (DK); HOPPE, Sandra, 81541 Munich (DE)
(74) Representative: Nokia EPO representatives

(57) **Abstract**

Disclosed is a method comprising determining whether one or more conditions are fulfilled for skipping reading of one or more mobility-related system information broadcast messages on a cell of a non-terrestrial network; and based on determining whether the one or more conditions are fulfilled, determining whether to skip the reading of the one or more mobility-related system information broadcast messages on the cell of the non-terrestrial network.

## Description

### FIELD

The following example embodiments relate to wireless communication and to non-terrestrial networks.

### BACKGROUND

A non-terrestrial network (NTN) refers to a communication network that uses space-based or airborne platforms, such as satellites, high-altitude platforms, or unmanned aerial vehicles, to provide connectivity. Unlike terrestrial networks that rely on ground-based infrastructure, NTNs can offer coverage in remote or underserved areas, enhance network resilience, and support a wide range of applications, including broadband internet, disaster recovery, and Internet of Things connectivity.

### SUMMARY

The scope of protection sought for various example embodiments is set out by the claims. The example embodiments and features, if any, described in this specification that do not fall under the scope of the claims are to be interpreted as examples useful for understanding various embodiments.

Other features and advantages of the embodiments of the present disclosure will also be apparent from the following description of specific embodiments when read in conjunction with the accompanying drawings, which illustrate, by way of example, the principles of embodiments of the disclosure.

### BRIEF DESCRIPTION OF THE DRAWINGS

In the following, various example embodiments will be described in greater detail with reference to the accompanying drawings, in which
FIG. 1A illustrates an example of a non-terrestrial network;
FIG. 1B illustrates an example of a system in a mobility scenario;
FIG. 2 illustrates a flow chart;
FIG. 3 illustrates a flow chart; and
FIG. 4 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Some example embodiments described herein may be implemented in a wireless communication network comprising a radio access network based on one or more of the following radio access technologies (RATs): fifth generation (5G), 5G new radio (NR), 5G-Advanced (i.e., 3GPP NR Rel-18 and beyond), sixth generation (6G), or seventh generation (7G). Some examples of radio access networks include the universal mobile telecommunications system (UMTS) radio access network (UTRAN), the evolved universal terrestrial radio access network (E-UTRA), or the next generation radio access network (NG-RAN).

It should be noted that the embodiments are not restricted to the wireless communication network given as an example, but a person skilled in the art may also apply the solution to other wireless communication networks or systems provided with necessary properties.

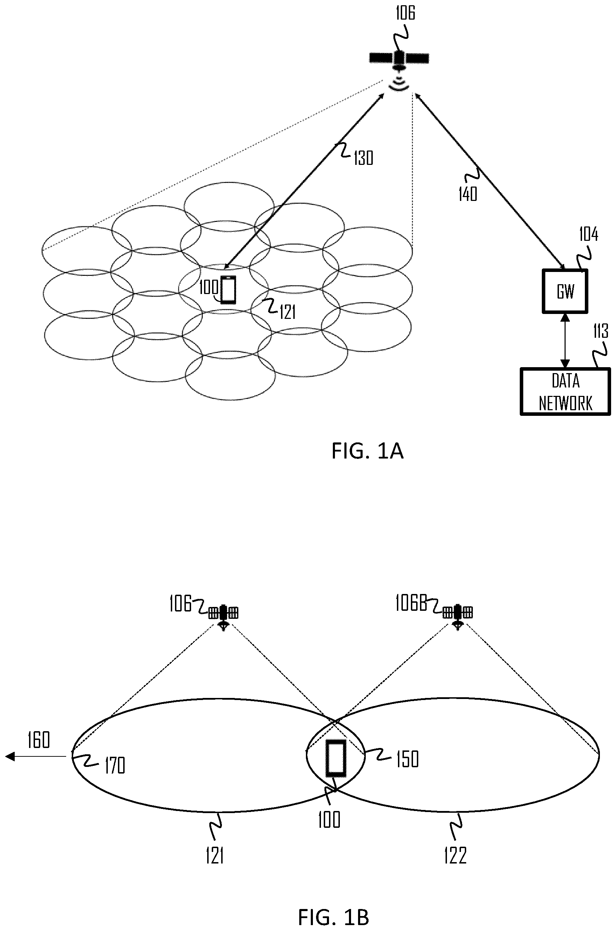

FIG. 1A illustrates a simplified example of a non-terrestrial network (NTN), such as a satellite communication network, showing some physical and logical entities. The connections shown in FIG. 1A may be physical connections or logical connections. It is apparent to a person skilled in the art that the network may also comprise other physical and logical entities than those shown in FIG. 1A.

The example embodiments described herein are not, however, restricted to the wireless communication network given as an example, but the example embodiments described herein may be applied to other wireless communication networks provided with necessary properties.

FIG. 1A shows user equipment (UE) 100 configured to be in a wireless connection on one or more communication channels in a radio cell 121 with a satellite 106 of a non-terrestrial network.

A non-terrestrial network may refer to a network, or a segment of networks, using radio frequency (RF) resources managed/controlled by a satellite 106. The satellite 106 may provide communication services on Earth (or on another planet) via one or more satellite beams. The one or more satellite beams create one or more cells 121 over a given service area bounded by the field of view of the satellite 106. The beam footprints (i.e., the cells 121) may be elliptical in shape. The satellite 106 may be used to provide communication coverage over a very large area (e.g., with a diameter of tens, hundreds, or even thousands of kilometers) that may be otherwise unreachable by cellular networks.

The satellite 106 may be, for example, a low earth orbit (LEO) satellite, a geostationary earth orbit (GEO) satellite, an unmanned aerial vehicle (UAV), a high-altitude platform system (HAPS), or any other spaceborne or airborne device used for communication.

As an example, the satellite 106 may be a LEO satellite at an altitude between 160 to 2000 kilometers above the surface of the Earth. At such an altitude, the satellite may be moving at a speed of approximately 7.5 kilometers per second relative to the Earth. For a LEO satellite, the beam footprint (i.e., cell 121) may have a radius between 100 to 1000 kilometers. The cell 121 may be an Earth-fixed cell (EFC), a quasi-Earth-fixed cell, or an Earth-moving cell (EMC).

An EFC means that the satellite 106 continuously adjusts the satellite beam pointing direction (beam steering) to fix the cell 121 and beam to a specific point on Earth as the satellite 106 is moving. In other words, in this case, the position of the cell 121 does not change over time, and it consistently covers the same geographic area.

A quasi-Earth-fixed cell, on the other hand, refers to a cell whose coverage area appears to be nearly fixed relative to the Earth's surface but may experience slight movements or adjustments. This can occur due to factors like the satellite's orbital characteristics or minor adjustments in its position. While the cell is not entirely stationary in this case, its movement is minimal enough that it can be considered almost fixed from the perspective of users on the ground. The quasi-Earth-fixed cells may apply to non-geostationary satellites, because the satellite (e.g., LEO satellite) at some point will be low on the horizon relative to the fixed cell. Thus, only geostationary satellites can have truly Earth-fixed cells.

An EMC means that the satellite beam pointing direction is fixed, and thus the beam footprint (i.e., the cell 121) is continuously moving on Earth according to the movement of the satellite 106. In other words, in this case, the satellite 106 does not adjust the beam steering, but instead the cell coverage sweeps the Earth as the satellite 106 moves. In EMC-based NTN, the mobility is mainly due to satellite movement as the satellite 106 moves much faster than the UE(s) 100 on the ground.

There may be a service link 130 (i.e., a radio link) between the satellite 106 and one or more UEs 100 within the targeted service area for communication between the satellite 106 and the one or more UEs 100.

Furthermore, there may be a feeder link 140 (i.e., another radio link or an optical link) between the satellite 106 and a ground-based NTN gateway (GW) 104 for communication between the satellite 106 and the gateway 104. In other words, the feeder link 140 is a connection between the satellite 106 and the NTN gateway 104. The NTN gateway 104 may comprise a base station, such as an evolved NodeB (abbreviated as eNB or eNodeB), or a next generation evolved NodeB (abbreviated as ng-eNB), or a next generation NodeB (abbreviated as gNB or gNodeB). The NTN gateway 104 may be connected to a core network and/or an external data network 113 (e.g., the internet).

In a transparent architecture of the non-terrestrial network, the access node (NTN gateway) 104 of the non-terrestrial network is located on ground (i.e., the base station 104 is on Earth). In this case, the satellite 106 may just forward the signals it receives from the NTN gateway 104 to one or more UEs 100, and vice versa (i.e., the satellite 106 may act as a repeater between the one or more UEs 100 and the NTN gateway 104). In the transparent architecture, there may be a feeder link (i.e., a radio link) 140 between the satellite 106 and the ground-based NTN gateway 104, as well as a service link 130 (i.e., another radio link) between the satellite 106 and the one or more UEs 100 within the targeted service area. The transparent architecture may also be referred to as a transparent payload architecture.

Alternatively, in a regenerative architecture of the non-terrestrial network, the access node of the non-terrestrial network (i.e., partial or full base station functionality) is onboard the satellite 106 itself (e.g., the satellite 106 may comprise a gNB). In this architecture, no ground-based NTN gateway 104 or feeder link 140 is needed. This means that the satellite 106 does more than just forwards signals: it can process the signals it receives, perform functions such as decoding, demodulation, and remodulation, and then transmit the processed signals to one or more UEs 100 over the service link 130. The regenerative architecture may also be referred to as having regenerative payloads.

The one or more UEs 100 may have global navigation satellite system (GNSS) support, which means that the one or more UEs 100 may have access to GNSS location information and/or GNSS time information. The global positioning system (GPS) is an example of a GNSS. The GNSS support enables the one or more UEs 100 to obtain an understanding of the time and/or frequency relations between itself and the satellite 106 and/or NTN gateway 104 for synchronization purposes. The GNSS information may also be used for mobility purposes and/or country identification. The satellite 106 may be a separate entity from the GNSS. The GNSS may also provide input to other network node(s) in the NTN system, so that the network node(s) are able to determine the position of the satellite at any given time. In an alternative example, the UE 100 may have a hard-coded location information, in case the UE is not moving. In another example, the UE 100 may determine the UE location based on 3GPP positioning reference signals or other 3GPP positioning mechanisms such as network-estimated UE position.

The satellite 106 may comprise a computing device configured to control the radio resources of the satellite 106 and to be in a wireless connection with one or more UEs 100. The satellite 106 may include or be coupled to transceivers. From the transceivers of the satellite 106, a connection may be provided to an antenna unit that establishes a bi-directional radio link to one or more UEs 100. The antenna unit may comprise an antenna or antenna element, or a plurality of antennas or antenna elements.

The wireless connection (e.g., radio link) from a UE 100 to the satellite 106 may be called uplink (UL) or reverse link, and the wireless connection (e.g., radio link) from the satellite 106 to the UE 100 may be called downlink (DL) or forward link.

The non-terrestrial network may comprise more than one satellite 106, in which case the satellites may also be configured to communicate with one another over wireless links. These links between satellites may be used for sending and/or receiving control plane signaling and also for routing data from one satellite to another satellite.

The illustrated UE 100 is one type of an apparatus to which resources on the air interface may be allocated and assigned. The UE 100 may also be called a wireless communication device, a subscriber unit, a mobile station, a remote terminal, an access terminal, a user terminal, a terminal device, or a user device, just to mention but a few names. The UE 100 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a household appliance with radio parts, a sensor comprising a wireless modem, or a computing device comprising a wireless modem integrated in a vehicle or in a house.

It should be appreciated that the UE 100 may also be a nearly exclusive uplink-only device, of which an example may be a camera or video camera loading images or video clips to a network. The UE 100 may also be a device having capability to operate in an Internet of Things (IoT) network, which is a scenario in which objects may be provided with the ability to transfer data over a network without requiring human-to-human or human-to-computer interaction.

FIG. 1B illustrates an example of a system, to which some example embodiments may be applied. FIG. 1B may be understood to depict a part of the non-terrestrial network of FIG. 1A, but with greater accuracy with respect to a mobility scenario.

Referring to FIG. 1B, during a handover (or cell re-selection), the connection of a UE 100 is transferred from the current serving cell (source cell) 121 controlled by a source node (e.g., a satellite) 106 to a target cell 122 controlled by a target node (e.g., another satellite) 106B, while preserving the ongoing voice call or data session. Herein the source cell 121 and the target cell 122 may be NTN cells. In one further example, the serving cell 121 and the target cell 122 may be provided by the same satellite 106. The target cell 122 may also be referred to as a neighbor cell.

In one example, the handover procedure may be initiated by the network (e.g., the source node 106), when certain pre-defined conditions are met, such as when the signal quality of the current serving cell (source cell) 121 falls below a specified threshold, or when the signal quality of the target cell (neighbor cell) 122 becomes better than that of the current serving cell 121 by a pre-defined offset. The decision to perform a handover may be based on various factors, including radio measurements such as reference signal received power (RSRP) and/or reference signal received quality (RSRQ), network load, UE mobility, location-based thresholds, time-based windows, and network configuration parameters.

There are various types of handover procedures. For example, a conditional handover (CHO) may be defined as a handover that is executed by the UE 100, when one or more handover execution conditions are met. In other words, in the case of CHO, the UE 100 receives (e.g., from the source node 106) a handover command with a CHO configuration indicating one or more handover execution conditions such as RSRP, distance and time, but the UE 100 does not execute the handover command until the one or more handover execution conditions are met. The UE 100 may start evaluating the one or more handover execution conditions upon receiving the CHO configuration, and stop evaluating the one or more handover execution conditions once a handover is executed.

The handover may be an intra-radio-access-technology (intra-RAT) handover or an inter-radio-access-technology (inter-RAT) handover. The handover may also be an intra-frequency cell change or an inter-frequency cell change.

An intra-RAT handover means that the source cell 121 and the target cell 122 are based on the same radio access technology. For example, in an intra-NR handover, both the source node 104 and the target node 104B may be gNBs (i.e., NR base stations).

An inter-RAT handover means that the source cell 121 and the target cell 122 are based on different radio access technologies. For example, in an inter-RAT handover, the source node 104 may be an eNB or ng-eNB (i.e., 4G base station), and the target node 104B may be a gNB (i.e., NR base station), or vice versa.

In case of EFC, there are two different kinds of mobility events (or handovers). The first kind of handover refers to the case where the fixed cell 121 (e.g., quasi earth fixed cell) is replaced by another fixed cell 122, when the serving satellite 106 moves too low in the horizon. In case of transparent architecture, this can even be done by resynchronization without change of the physical cell identity (PCI), in which case it is not considered as an actual handover. In the case of regenerative architecture, there is an actual handover (i.e., change of PCI), but the event is very predictable. Likewise, cell re-selections can be performed based on the known change of satellite coverage. The end of coverage from an EFC may be indicated by a parameter called t-service, which defines the time when the cell stops serving the area where the UE 100 is located in. There may also be a parameter t-serviceStart defining when another cell starts serving the area.

The other kind of handover is due to UE movement, where a UE 100 simply crosses the border of the serving cell 121 and performs a handover or cell re-selection to the target cell 122.

In case of EMC, a UE 100 at the trailing part 150 of the border of the cell 121, opposite to the movement direction 160 of the satellite 106 (i.e., opposite to the leading part 170 of the cell border), is more likely to experience mobility events due to cell movement and the UE's own movement.

The leading part 170 of the cell border refers to the area of the cell border that is in the direction 160 of the satellite's movement. Conversely, the trailing part 150 of the cell border is the area of the cell border that is opposite to the satellite's movement direction 160. When the UE 100 is at or close to the trailing part 150 of the cell border, it is more likely to experience mobility events due to the movement of the satellite 106 (and the movement of the UE itself). This is because the cell coverage area is constantly shifting as the satellite 106 moves.

In all cases of mobility, the UE 100 needs to perform radio measurements (e.g., RSRP and/or RSRQ measurements) on the serving cell 121 and/or on the neighbor cell 122. In order to do so, the UE 100 acquires information related to the mobility events through the system information blocks (SIBs), which are broadcasted at regular time intervals on the cell 121. For example, the following SIBs may be defined as mobility-related SIBs: SIB2, SIB3, SIB4, and SIB5. In other words, these SIBs comprise information related to mobility.

SIB2 comprises cell re-selection information common for intra-frequency, inter-frequency and/or inter-RAT cell re-selection (i.e., applicable for more than one type of cell re-selection but not necessarily all), as well as intra-frequency cell re-selection information, other than neighbor cell related.

SIB3 comprises neighbor cell related information relevant only for intra-frequency cell re-selection. The information element (IE) within SIB3 includes cells with specific re-selection parameters as well as exclude-listed cells.

SIB4 comprises information relevant for inter-frequency cell re-selection (i.e., information about other NR frequencies and inter-frequency neighbouring cells relevant for cell re-selection), which can also be used for NR idle/inactive measurements. The IE within SIB4 includes cell re-selection parameters common for a frequency, as well as cell-specific re-selection parameters.

SIB5 comprises information relevant only for inter-RAT cell re-selection, i.e., information about E-UTRA frequencies and E-UTRA's neighbouring cells relevant for cell re-selection. The IE within SIB5 includes cell re-selection parameters common for a frequency.

The UE 100 may be configured with a validity time for a given SIB. For example, the UE may only need to read the SIB every 3 hours, unless it is changed.

In NTN, cells may be large, and a UE that is stationary and/or away from the cell border is not likely to see a mobility event, except in case of EFC around the time of the cell change.

SIB1 and SIB2 can be configured for limited mobility. For example, SIB1 can be configured for barring neighbor cells or specifying a preferred cell. As another example, mobility-related parameters in SIB2 can be adjusted to deprioritize cell re-selection.

Some example embodiments enable a UE to save energy by not reading one or more mobility-related SIBs in case of low likelihood of UE mobility (i.e., low likelihood of a handover) in a non-terrestrial network. Some example embodiments may also facilitate faster cell re-selection in some scenarios, as the UE is not required to scan multiple frequencies and/or RATs, and thus it may finish neighbor cell measurements earlier in relevant inter-frequency cells.

Some example embodiments are described below using principles and terminology of 5G radio access technology without limiting the example embodiments to 5G radio access technology, however.

In some example embodiments, the UE may avoid reading one or more mobility-related system information broadcast messages in a period when it is not expected to perform a handover or cell change. The UE may be expecting a cell change at some point due to satellite (cell) movement, but since the cell covers such a large area, the change may take some time (e.g., 6 seconds in LEO), and in the meantime the UE may avoid performing unnecessary SIB acquisitions and mobility measurements.

Some example embodiments specify one or more rules or conditions that help a UE to determine whether to read one or more mobility-related SIBs (e.g., SIB2, 3, 4 and/or 5). In case of at least one of the following events or conditions, the UE does not need to read at least one of SIB2, SIB3, SIB4, or SIB5, and the associated validity time is not used (or is set to a high value such as infinity).

In case of EMC, the UE may skip reading the mobility-related SIB(s), when the UE is not close to the cell border and not moving. Herein the cell border may be limited to the trailing part 150 of the cell border opposite to the satellite movement, i.e., where the satellite coverage moves away. Close to the cell border may be defined as a distance threshold relative to the cell border or relative to a cell reference point (e.g., the middle point of the cell).

In case of a moving UE, this distance threshold may be further weighted with the speed and direction of the UE. For example, if the UE is moving at a slow speed (e.g., 5 kilometers per hour) towards the cell border, then the distance threshold may be set as 100 meters from the cell border (i.e., the UE may start reading the SIBs and performing measurements when it is 100 meters from the cell border). On the other hand, if the UE is moving at a higher speed (e.g., a car moving at 100 kilometers per hour) towards the cell border, then the distance threshold may be set higher (e.g., 2 kilometers from the cell border). For example, the network (e.g., by the satellite 106) may provide assistance information to the UE to define the weights, or the weights may be determined by the UE. In another example, the distance threshold may be configured by the network (e.g., by the satellite 106) with one threshold for stationary UEs and at least one other threshold for moving UEs.

In case of EFC, the UE may skip reading the mobility-related SIB(s), when the UE is not close to the cell border and not moving, and the fixed cell is not being replaced by another cell in a given time duration.

Close to the cell border can be defined as a distance (referenced to the UE location) to the cell border, or the UE not being closer than a certain threshold to the cell reference point (e.g., the middle point of the cell). This distance may be further weighted with the speed and direction of the UE, in case of a moving UE. If the UE is stationary (i.e., not moving at all), the UE may skip the reading of mobility SIB altogether. The UE may know its own location and whether it is moving, based on GNSS location information, for example.

In case of EFC, and the cell being replaced by another cell, this information of the specific neighbor cell may be provided to the UE in a separate SIB, and the UE may be required to read this separate SIB only once while being in the cell.

Alternatively, the network may indicate that the UE is only required to obtain either the intra- or inter-frequency SIB3/4 information, depending on whether the incoming cell (neighbor cell) is reusing the current cell's spectrum/frequency carrier/bandwidth or not.

When the UE is close to the cell border (cell edge), the network (e.g., the satellite 106) may also define whether the UE is required to obtain all of intra/inter-frequency and inter-RAT (SIB3/4/5) or only a subset of them based on the deployment scenario. For example, the network may know that there are no inter-frequency cells in the current coverage area, and thus it is useless for the UE to acquire SIB4.

In case of fixed wireless access (FWA), such as a satellite dish connected to a house, where a stationary UE attaches to a single gNB without fallback, the UE may read SIB2 during initial access but skip reading SIB2 for subsequent sessions. In this case, the UE may skip reading SIB3, SIB4, and SIB5 altogether.

In an alternative embodiment, if the UE is within coverage of the current cell, and the cell is configured with satellite switching with the same PCI, the configuration of the satellite switch may be seen as an implicit indication for the UE to skip reading the mobility-related SIB(s). This may apply to earth-fixed cells with transparent architecture (i.e., with an NTN gateway 104 on the ground), where the cell may be replaced or switched such that the target cell has the same PCI as the source cell. In this case, if the UE is away from the cell border and has received information about this satellite switching configuration from the network (e.g., from the satellite 106), then the UE does not need to read the mobility-related SIBs.

In some cases, for instance in multi-orbit where UEs are desired to move to GEO cells, the skipping may be configurable (e.g., through SIB or dedicated signaling). For example, if the network (e.g., the satellite 106) indicates that the multi-orbit deployment is not available, the UE may not be required to obtain inter-RAT SIB5 (assuming that the LEO cell and GEO cell belong to different RATs). This concept may also be applied to the other mobility related SIBs (e.g., SIB2, SIB3, or SIB4, etc.).

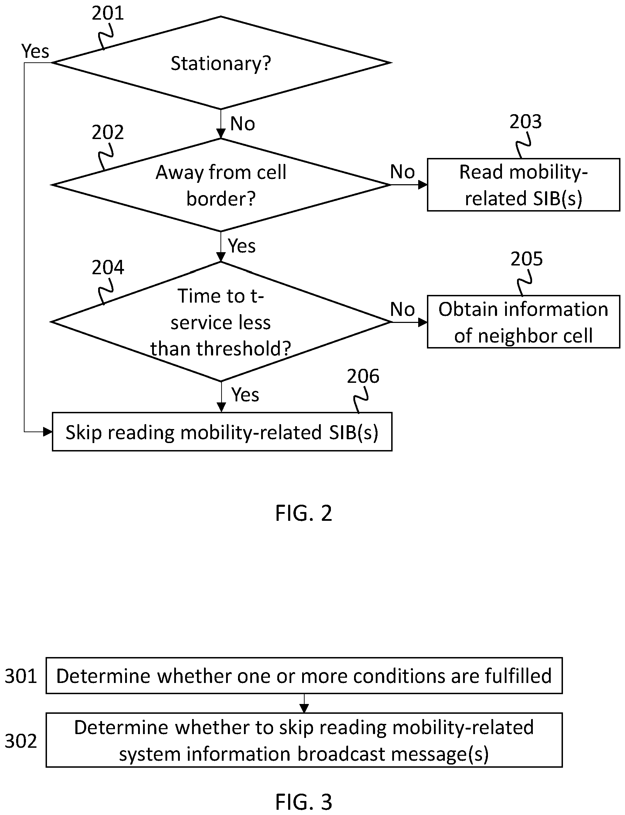

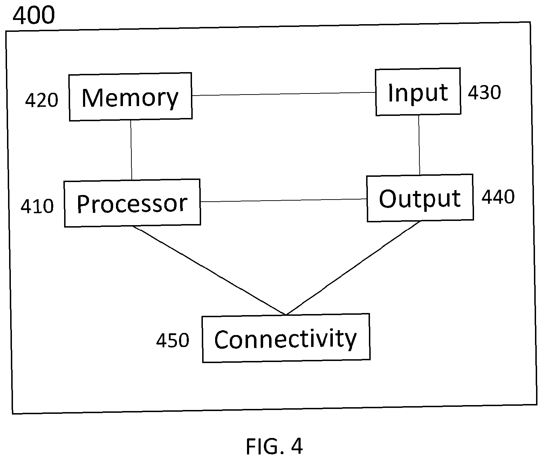

FIG. 2 illustrates a flow chart according to an example embodiment of a method A1 for determining whether to skip reading one or more mobility-related system information broadcast messages on an earth-fixed cell or a quasi-earth-fixed cell. The method A1 may be performed by an apparatus 400 depicted in FIG. 4. For example, the apparatus 400 may be, or comprise, or be comprised in, a user device (i.e., UE) 100.

Referring to FIG. 2, in block 201, the apparatus 400 determines whether the apparatus 400 is stationary (e.g., fixed to a specific location such as a wall or similar). The apparatus 400 knows its position (e.g., based on GNSS positioning), and therefore the apparatus 400 also knows whether it is moving or not.

In block 202, based on determining that the apparatus 400 is not stationary (block 201: no), the apparatus 400 determines whether the apparatus 400 is away from a border of a cell 121 (i.e., not close to the border of the cell 121). For example, the border of the cell may be defined as a geometric border in the sense of a cell reference point (e.g., the center of the cell) on Earth and a radius extending from that reference point (i.e., this radius defines the extent of the cell's coverage area). The network (e.g., the satellite 106 providing the cell 121) may provide (e.g., broadcast) information (e.g., SIB19) to the apparatus 400 to indicate where the reference point and the cell border are, or how the cell border is defined.

As another example, the border of the cell 121 may be defined as a minimum elevation angle. For example, the border may be at a 30-degree elevation angle between the Earth's surface and the satellite 106. In this case, if the apparatus 400 determines an elevation angle below 30 degrees, then it means that the apparatus 400 is outside the cell 121.

The cell 121 may refer to the current serving cell of the apparatus 400. In this example embodiment, the cell 121 may be an earth-fixed cell or a quasi-earth-fixed-cell.

It can be taken into account if the apparatus 400 is moving, for instance by defining the border as the amount of time it will take for the apparatus 400 to cross the border (based on distance and speed, where speed is the speed component in the direction of the border). Alternatively, the border may be defined as a distance from the cell reference point (e.g., cell center) or to the cell border (cell reference point + radius). For an earth-moving cell, the border of the cell 121 may refer to the trailing part 150 of the border that is opposite to the movement direction 160 of a satellite 106 providing the cell 121.

In block 203, based on determining that the apparatus 400 is not away from the border of the cell 121 (block 202: no), the apparatus 400 reads one or more mobility-related system information broadcast messages on the cell 121 of the non-terrestrial network.

For example, the one or more mobility-related system information broadcast messages may comprise at least one of: a system information block type 2 (SIB2), a system information block type 3 (SIB3), a system information block type 4 (SIB4), or a system information block type 5 (SIB5).

The "reading" may refer to the process of receiving and interpreting the one or more mobility-related system information broadcast messages by the apparatus 400. This may involve the apparatus 400 accessing and processing these message(s) to manage its mobility and connectivity within the non-terrestrial network.

As another example, the "reading" may refer to the apparatus 400 monitoring for scheduling information. The scheduling information may indicate how the one or more mobility-related system information broadcast messages are transmitted on the cell 121. The scheduling information may comprise at least one of: time domain resource(s), frequency domain resource(s), or modulation and coding scheme (MCS), defining how the cell 121 will transmit the one or more mobility-related system information broadcast messages. The scheduling information may not be provided in every (configured) monitoring occasion, and therefore the "reading" may be considered a "monitoring" where nothing is received in some occasions, while in other occasions the information is transmitted by the network device (e.g., the satellite 106) of the cell 121 in the monitoring occasion. In one example, the monitoring occasion may be defined as Physical Downlink Control Channel (PDCCH) monitoring occasions, and the scheduling information may be provided in Downlink Control Information (DCI) on the Physical Downlink Control Channel. In this example, skipping the reading refers to the apparatus 400 not monitoring for the Downlink Control Information in a monitoring occasion.

Alternatively, in block 204, based on determining that the apparatus 400 is away from the border of the cell 121 (block 202: yes), the apparatus 400 determines whether a time duration (e.g., t-service) to switching from the cell 121 to a neighbor cell 122 is higher than a first threshold. In other words, it is checked if the time is close to the point where the cell 121 is being switched to the neighbor cell 122 replacing the current cell 121 (by the next satellite 106B). The first threshold may be pre-defined or provided by the network (e.g., by the satellite 106 controlling the cell 121).

In block 205, based on determining that the time duration is not higher than the first threshold (block 204: no), the apparatus 400 reads a separate system information broadcast message on the cell 121. The separate system information broadcast message comprises information associated with the neighbor cell 122. The separate system information broadcast message is read while the apparatus 400 is in the cell 121. In other words, information about the relevant neighbor cell may be provided in a new SIB, or by reading one of the existing SIBs, and the apparatus 400 reads this SIB. The apparatus 400 may execute a cell switch from the cell 121 to the neighbor cell 122 based on the information.

As another example, there may be no such first threshold, but the apparatus 400 may just make sure that it has the SIB "in time", i.e., before the time to switch the cell (or the time when the serving cell 121 stops serving the apparatus 400) is reached.

The separate system information broadcast message refers to a system information broadcast message that is different from the one or more mobility-related system information broadcast messages.

Alternatively, in block 206, based on determining that the time duration is higher than the first threshold (block 204: yes), or based on determining that the apparatus 400 is stationary (block 201: yes), the apparatus 400 determines to skip reading the one or more mobility-related system information broadcast messages on the cell of the non-terrestrial network.

The skipping means that the apparatus 400 decides not to read (e.g., receive and process) the one or more mobility-related system information broadcast messages from the cell 121 of the non-terrestrial network, even if the validity time of the corresponding previously received system information broadcast message(s) has expired. In other words, the apparatus 400 ignores the validity time and refrains from reading the one or more mobility-related system information broadcast messages.

It should be noted that block 204 may only apply to (quasi-)earth-fixed cells. In case the cell is not a (quasi-)earth-fixed cell, then block 204 may be omitted. In this case (e.g., if the cell 121 is an earth-moving cell), block 206 may follow block 202 such that, based on determining that the apparatus 400 is away from the border of the cell 121 (block 202: yes), the apparatus 400 may determine to skip reading the one or more mobility-related system information broadcast messages on the cell 121 of the non-terrestrial network.

Furthermore, in case the cell 121 is an earth-moving cell, then the cell 121 may be moving even if the apparatus 400 is stationary. In this case, if the apparatus 400 is stationary, it may also determine whether it is away from the cell border in order to determine whether to skip the reading of the one or more mobility-related system information broadcast messages.

FIG. 3 illustrates a flow chart according to an example embodiment of a method A2 for determining whether to skip reading one or more mobility-related system information broadcast messages. The method A2 may be performed by an apparatus 400 depicted in FIG. 4. For example, the apparatus 400 may be, or comprise, or be comprised in, a user device (i.e., UE) 100.

According to a first aspect, the method A2 comprises the following.

Referring to FIG. 3, in block 301, it is determined whether one or more conditions are fulfilled for skipping reading of one or more mobility-related system information broadcast messages on a cell 121 of a non-terrestrial network.

In block 302, based on determining whether the one or more conditions are fulfilled, it is determined whether to skip the reading of the one or more mobility-related system information broadcast messages on the cell 121 of the non-terrestrial network.

According to a second aspect, there is provided the method A2 of the first aspect, further comprising: skipping the reading of the one or more mobility-related system information broadcast messages on the cell 121 of the non-terrestrial network, based on (or in response to) determining that the one or more conditions are fulfilled.

According to a third aspect, there is provided the method A2 of the second aspect, wherein the reading of the one or more mobility-related system information broadcast messages is skipped regardless of whether a corresponding previously read mobility-related system information broadcast message of the cell 121 is valid (e.g., as defined by a validity time or a validity timer of the previously read mobility-related system information broadcast message).

According to a fourth aspect, there is provided the method A2 of the first aspect, further comprising: reading the one or more mobility-related system information broadcast messages on the cell 121 of the non-terrestrial network, based on (or in response to) determining that at least one of the one or more conditions is not fulfilled.

For example, if the apparatus 400 is configured with two conditions and one of the conditions is fulfilled but the other condition is not fulfilled, then the apparatus 400 may read the one or more mobility-related system information broadcast messages. Alternatively, the apparatus 400 may read the one or more mobility-related system information broadcast messages, if both of the conditions are not fulfilled.

According to a fifth aspect, there is provided the method A2 of any preceding aspect, wherein the one or more conditions comprise at least one of: the apparatus 400 being stationary, the apparatus 400 being away from a border of the cell 121, a time duration to switching to a neighbor cell 122 being higher than a first threshold, a time duration until the cell 121 stops serving the apparatus 400 being higher than a second threshold, or the apparatus 400 being configured with a satellite switching configuration for switching between cells with a same cell identity.

For example, if the apparatus 400 is within coverage of the current cell 121, and the cell 121 is configured with satellite switching with the same PCI, the configuration of the satellite switch may be seen as an implicit indication for the apparatus 400 to skip reading the mobility-related SIB(s).

Herein the terms "first threshold" and "second threshold" are used to distinguish the thresholds, and they do not necessarily refer to a specific order of the thresholds.

According to a sixth aspect, there is provided the method A2 of the fifth aspect, further comprising: receiving, from a network device (e.g., a satellite 106) associated with (or providing) the cell 121, system information indicating at least one of: the first threshold, the second threshold, a distance threshold for determining whether the apparatus 400 is away from the border of the cell 121, or a time threshold for determining whether the apparatus 400 is away from the border of the cell 121.

According to a seventh aspect, there is provided the method A2 of the fifth or sixth aspect, wherein the border of the cell 121 comprises (or refers to) a trailing part 150 of the border that is opposite to a movement direction 160 of a satellite 106 providing the cell 121.

According to an eighth aspect, there is provided the method A2 of any of the fifth to seventh aspects, further comprising: determining, based on a distance threshold, whether the apparatus 400 is away from the border of the cell 121, wherein the distance threshold is relative to the border of the cell 121, such that the apparatus 400 is considered to be away from the border of the cell 121 if a distance between the apparatus and the border of the cell 121 is higher than or equal to the distance threshold.

According to a ninth aspect, there is provided the method A2 of any of the fifth to seventh aspects, further comprising: determining, based on a distance threshold, whether the apparatus 400 is away from the border of the cell 121, wherein the distance threshold is relative to a reference point in the cell 121, such that the apparatus 400 is considered to be away from the border of the cell 121 if a distance between the apparatus 400 and the reference point is less than or equal to the distance threshold.

According to a tenth aspect, there is provided the method A2 of the eighth or ninth aspect, further comprising: determining the distance threshold based at least on a speed and a direction of the apparatus 400. In other words, the distance threshold may be set based on how fast the apparatus 400 is moving and in which direction relative to the border of the cell 121. This allows to dynamically adjust the distance threshold, ensuring that the apparatus 400 is considered to be "away" from the cell border, if the distance between the apparatus 400 and the cell border is greater than or equal to the distance threshold, or if the distance between the apparatus 400 and the cell reference point is less than or equal to the distance threshold. This approach helps in managing mobility and connectivity more effectively in non-terrestrial networks.

A non-limiting example of determining the distance threshold is presented in the following. For instance, the apparatus 400 may be moving at a speed of 60 kilometers per hour towards the border of the cell 121. The distance threshold may also be based on a time duration within which the apparatus 400 is considered to be "away" from the border of the cell 121. For instance, if this time duration is 10 minutes (one sixth of an hour), then the distance threshold may be determined as follows: $Distance Threshold = Speed \times Time Duration = 60 km / h \times \frac{1}{6} h = 10 km$

So, in this example, the distance threshold would be 10 kilometers. In this case, if the apparatus 400 is 10 kilometers or more away from the cell border, it is considered to be "away" from the border.

According to an eleventh aspect, there is provided the method A2 of any of the fifth to seventh aspects, further comprising: determining, based on a time threshold, whether the apparatus 400 is away from the border of the cell 121, wherein the time threshold is relative to the apparatus 400 crossing the border of the cell 121, such that the apparatus 400 is considered to be away from the border of the cell 121 if an expected time duration until the apparatus 400 crosses the border of the cell 121 is higher than the time threshold.

The crossing may be due to the movement of the apparatus 400 and/or due to the movement of the cell 121 (e.g., in case the cell 121 is an earth-moving cell).

According to a twelfth aspect, there is provided the method A2 of the eleventh aspect, further comprising: determining the expected time duration until the apparatus 400 crosses the border of the cell 121, wherein the expected time duration is determined based at least on a speed of the apparatus towards the border of the cell 121, and a distance between the apparatus 400 and the border of the cell 121.

In case the cell is an earth-moving cell, then the speed may be relative (i.e., the speed of the apparatus 400 in relation to the movement speed of the cell 121). In other words, both the apparatus 400 and the cell 121 may be in motion. In this case, the relative speed is the difference between the speed of the apparatus 400 and the speed of the cell 121. This relative speed may be used to determine how quickly the apparatus 400 will reach or cross the border of the moving cell 121.

A non-limiting example of determining the expected time duration is presented in the following. For instance, the apparatus 400 may be moving at a relative speed of 60 kilometers per hour towards the border of the cell 121, and the current distance between the apparatus 400 and the border of the cell 121 may be 15 kilometers. In this case, the expected time duration until the apparatus 400 crosses the cell border may be determined as follows: $Time duration = \frac{Distance}{Speed} = \frac{15 km}{60 km / h} = 0.25 hours$

Thus, in this example, the expected time duration until the apparatus 400 crosses the cell border is 0.25 hours (i.e., 15 minutes).

According to a thirteenth aspect, there is provided the method A2 of any preceding aspect, further comprising: reading a separate system information broadcast message on the cell 121, wherein the separate system information broadcast message comprises information associated with a neighbor cell 122, wherein the separate system information broadcast message is read while the apparatus is in the cell 121; and executing a cell switch from the cell 121 to the neighbor cell 122 based on the information.

For example, the separate system information broadcast message may be read only once while the apparatus 400 is in the cell 121. The separate system information broadcast message may only comprise information associated with the neighbor cell 122. The neighbor cell 122 may refer to a cell that will provide coverage in the area where the apparatus 400 is located in (after the current cell 121 stops serving the area).

According to a fourteenth aspect, there is provided the method A2 of the thirteenth aspect, further comprising: receiving, from a network device (e.g., a satellite 106) associated with (or providing) the cell 121, an indication indicating to read only intra-frequency cell re-selection information or only inter-frequency cell re-selection information related to the neighbor cell 122 from the separate system information broadcast message, wherein the separate system information broadcast message is read based on the indication.

According to a fifteenth aspect, there is provided the method A2 of the thirteenth aspect, further comprising: receiving, from a network device (e.g., a satellite 106) associated with (or providing) the cell 121, an indication indicating whether to read at least one of: intra-frequency cell re-selection information related to the neighbor cell 122, inter-frequency cell re-selection information related to the neighbor cell 122, or inter-radio-access-technology cell re-selection information related to the neighbor cell 122, wherein the separate system information broadcast message is read based on the indication.

According to a sixteenth aspect, there is provided the method A2 of any preceding aspect, wherein the one or more mobility-related system information broadcast messages comprise at least one of: a system information block type 2, a system information block type 3, a system information block type 4, or a system information block type 5.

According to another aspect, there is provided an apparatus 400 comprising means for causing the apparatus 400 to perform at least the method A2 of any of the first to sixteenth aspects.

According to another aspect, there is provided an apparatus 400 comprising at least one processor 410, and at least one memory 420 storing instructions that, when executed by the at least one processor 410, cause the apparatus 400 to perform at least the method A2 of any of the first to sixteenth aspects.

According to another aspect, there is provided a computer program or a computer readable medium (e.g., a non-transitory computer-readable medium) comprising instructions which, when executed by an apparatus 400, cause the apparatus 400 to perform at least the method A2 of any of the first to sixteenth aspects.

In another example embodiment, there is provided a method A3 for determining whether to skip reading one or more mobility-related system information broadcast messages. The method A3 may be performed by an apparatus 400 depicted in FIG. 4. For example, the apparatus 400 may be, or comprise, or be comprised in, a user device (i.e., UE) 100.

According to a first aspect, the method A3 comprises at least: determining whether one or more conditions are fulfilled for skipping reading of one or more mobility-related system information broadcast messages on an earth-moving cell 121 of a non-terrestrial network. wherein the one or more conditions comprise at least one of: the apparatus 400 being stationary, or the apparatus 400 being away from a border of the earth-moving cell 121; and based on determining whether the one or more conditions are fulfilled, determining whether to skip the reading of the one or more mobility-related system information broadcast messages on the earth-moving cell 121 of the non-terrestrial network.

According to a second aspect, there is provided the method A3 of the first aspect, further comprising: skipping the reading of the one or more mobility-related system information broadcast messages on the earth-moving cell 121 of the non-terrestrial network, based on determining that the one or more conditions are fulfilled.

According to a third aspect, there is provided the method A3 of the second aspect, wherein the reading of the one or more mobility-related system information broadcast messages is skipped regardless of whether a corresponding previously read mobility-related system information broadcast message of the earth-moving cell 121 is valid.

According to a fourth aspect, there is provided the method A3 of the first aspect, further comprising: reading the one or more mobility-related system information broadcast messages on the earth-moving cell 121 of the non-terrestrial network, based on determining that the one or more conditions are not fulfilled.

According to a fifth aspect, there is provided the method A3 of any preceding aspect, wherein the border of the earth-moving cell 121 comprises (or refers to) a trailing part 150 of the border that is opposite to a movement direction 160 of a satellite 106 providing the earth-moving cell 121.

According to a sixth aspect, there is provided the method A3 of any preceding aspect, further comprising: determining, based on a distance threshold, whether the apparatus 400 is away from the border of the earth-moving cell 121, wherein the distance threshold is relative to the border of the earth-moving cell 121, such that the apparatus 400 is considered to be away from the border of the earth-moving cell 121 if a distance between the apparatus 400 and the border of the earth-moving cell 121 is higher than or equal to the distance threshold.

According to a seventh aspect, there is provided the method A3 of any of the first to fifth aspects, further comprising: determining, based on a distance threshold, whether the apparatus 400 is away from the border of the earth-moving cell 121, wherein the distance threshold is relative to a reference point in the earth-moving cell 121, such that the apparatus 400 is considered to be away from the border of the earth-moving cell 121 if a distance between the apparatus 400 and the reference point is less than or equal to the distance threshold.

According to an eighth aspect, there is provided the method A3 of the sixth or seventh aspect, further comprising: determining the distance threshold based at least on a speed and a direction of the apparatus 400.

According to a ninth aspect, there is provided the method A3 of any of the first to fifth aspects, further comprising: determining, based on a time threshold, whether the apparatus 400 is away from the border of the earth-moving cell 121, wherein the time threshold is relative to the apparatus 400 crossing the border of the earth-moving cell 121, such that the apparatus 400 is considered to be away from the border of the earth-moving cell 121 if an expected time duration until the apparatus 400 crosses the border of the earth-moving cell 121 is higher than the time threshold.

According to a tenth aspect, there is provided the method A3 of the ninth aspect, further comprising: determining the expected time duration until the apparatus 400 crosses the border of the earth-moving cell 121, wherein the expected time duration is determined based at least on a speed of the apparatus 400 towards the border of the earth-moving cell 121, and a distance between the apparatus 400 and the border of the earth-moving cell 121.

According to an eleventh aspect, there is provided the method A3 of any preceding aspect, further comprising: receiving, from a network device (e.g., a satellite 106) associated with (or providing) the earth-moving cell 121, an indication indicating to read at least one of: intra-frequency cell re-selection information related to a neighbor cell 122 of the earth-moving cell 121, inter-frequency cell re-selection information related to the neighbor cell, or inter-radio-access-technology cell re-selection information related to the neighbor cell; and read, based on the indication, the at least one of: the intra-frequency cell re-selection information related to the neighbor cell 122, the inter-frequency cell re-selection information related to the neighbor cell 122, or the inter-radio-access-technology cell re-selection information related to the neighbor cell 122.

According to a twelfth aspect, there is provided the method A3 of any preceding aspect, wherein the one or more mobility-related system information broadcast messages comprise at least one of: a system information block type 2, a system information block type 3, a system information block type 4, or a system information block type 5.

According to a thirteenth aspect, there is provided the method A3 of any preceding aspect, wherein the apparatus 400 is a user device 100.

According to another aspect, there is provided an apparatus 400 comprising means for causing the apparatus 400 to perform at least the method A3 of any of the first to thirteenth aspects.

According to another aspect, there is provided an apparatus 400 comprising at least one processor 410, and at least one memory 420 storing instructions that, when executed by the at least one processor 410, cause the apparatus 400 to perform at least the method A3 of any of the first to thirteenth aspects.

According to another aspect, there is provided a computer program or a computer readable medium (e.g., a non-transitory computer-readable medium) comprising instructions which, when executed by an apparatus 400, cause the apparatus 400 to perform at least the method A3 of any of the first to thirteenth aspects.

In another example embodiment, there is provided a method A4 for determining whether to skip reading one or more mobility-related system information broadcast messages. The method A4 may be performed by an apparatus 400 depicted in FIG. 4. For example, the apparatus 400 may be, or comprise, or be comprised in, a user device (i.e., UE) 100.

According to a first aspect, the method A4 comprises at least: determining whether one or more conditions are fulfilled for skipping reading of one or more mobility-related system information broadcast messages on a quasi-earth-fixed cell 121 of a non-terrestrial network, wherein the one or more conditions comprise at least one of: the apparatus 400 being stationary, the apparatus 400 being away from a border of the quasi-earth-fixed cell 121, a time duration to switching to a neighbor cell 122 of the quasi-earth-fixed cell 121 being higher than a first threshold, or a time duration until the quasi-earth-fixed cell 121 stops serving the apparatus 400 being higher than a second threshold; and based on determining whether the one or more conditions are fulfilled, determining whether to skip the reading of the one or more mobility-related system information broadcast messages on the quasi-earth-fixed cell 121 of the non-terrestrial network.

According to a second aspect, there is provided the method A4 of the first aspect, further comprising: skipping the reading of the one or more mobility-related system information broadcast messages on the quasi-earth-fixed cell 121 of the non-terrestrial network, based on determining that the one or more conditions are fulfilled.

According to a third aspect, there is provided the method A4 of the second aspect, wherein the reading of the one or more mobility-related system information broadcast messages is skipped regardless of whether a corresponding previously read mobility-related system information broadcast message of the quasi-earth-fixed cell 121 is valid.

According to a fourth aspect, there is provided the method A4 of the first aspect, further comprising: reading the one or more mobility-related system information broadcast messages on the quasi-earth-fixed cell 121 of the non-terrestrial network, based on determining that the one or more conditions are not fulfilled.

According to a fifth aspect, there is provided the method A4 of any preceding aspect, further comprising: determining, based on a distance threshold, whether the apparatus 400 is away from the border of the quasi-earth-fixed cell 121, wherein the distance threshold is relative to the border of the quasi-earth-fixed cell 121, such that the apparatus 400 is considered to be away from the border of the quasi-earth-fixed cell 121 if a distance between the apparatus 400 and the border of the quasi-earth-fixed cell 121 is higher than or equal to the distance threshold.

According to a sixth aspect, there is provided the method A4 of any of the first to fourth aspects, further comprising: determining, based on a distance threshold, whether the apparatus 400 is away from the border of the quasi-earth-fixed cell 121, wherein the distance threshold is relative to a reference point in the quasi-earth-fixed cell 121, such that the apparatus 400 is considered to be away from the border of the quasi-earth-fixed cell 121 if a distance between the apparatus 400 and the reference point is less than or equal to the distance threshold.

According to a seventh aspect, there is provided the method A4 of the fifth or sixth aspect, further comprising: determining the distance threshold based at least on a speed and a direction of the apparatus 400.

According to an eighth aspect, there is provided the method A4 of any of the first to fourth aspects, further comprising: determining, based on a time threshold, whether the apparatus 400 is away from the border of the quasi-earth-fixed cell 121, wherein the time threshold is relative to the apparatus 400 crossing the border of the quasi-earth-fixed cell 121, such that the apparatus 400 is considered to be away from the border of the quasi-earth-fixed cell 121 if an expected time duration until the apparatus 400 crosses the border of the quasi-earth-fixed cell 121 is higher than the time threshold.

According to a ninth aspect, there is provided the method A4 of the eighth aspect, further comprising: determining the expected time duration until the apparatus 400 crosses the border of the quasi-earth-fixed cell 121, wherein the expected time duration is determined based at least on a speed of the apparatus 400 towards the border of the quasi-earth-fixed cell 121, and a distance between the apparatus 400 and the border of the quasi-earth-fixed cell 121.

According to a tenth aspect, there is provided the method A4 of any preceding aspect, further comprising: reading a separate system information broadcast message on the quasi-earth-fixed cell 121, wherein the separate system information broadcast message comprises information associated with the neighbor cell 122, wherein the separate system information broadcast message is read only once while the apparatus 400 is in the quasi-earth-fixed cell 121; and executing a cell switch from the quasi-earth-fixed cell 121 to the neighbor cell 122 based on the information.

According to an eleventh aspect, there is provided the method A4 of the tenth aspect, further comprising: receiving, from a network device (e.g., a satellite 106) associated with (or providing) the quasi-earth-fixed cell 121, an indication indicating to read only intra-frequency cell re-selection information or only inter-frequency cell re-selection information related to the neighbor cell 122 from the separate system information broadcast message, wherein the separate system information broadcast message is read based on the indication.

According to a twelfth aspect, there is provided the method A4 of the tenth aspect, further comprising: receiving, from a network device (e.g., a satellite 106) associated with (or providing) the quasi-earth-fixed cell 121, an indication indicating whether to read at least one of: intra-frequency cell re-selection information related to the neighbor cell 122, inter-frequency cell re-selection information related to the neighbor cell 122, or inter-radio-access-technology cell re-selection information related to the neighbor cell 122, wherein the separate system information broadcast message is read based on the indication.

According to a thirteenth aspect, there is provided the method A4 of any preceding aspect, wherein the one or more mobility-related system information broadcast messages comprise at least one of: a system information block type 2, a system information block type 3, a system information block type 4, or a system information block type 5.

According to another aspect, there is provided an apparatus 400 comprising means for causing the apparatus 400 to perform at least the method A4 of any of the first to thirteenth aspects.

According to another aspect, there is provided an apparatus 400 comprising at least one processor 410, and at least one memory 420 storing instructions that, when executed by the at least one processor 410, cause the apparatus 400 to perform at least the method A4 of any of the first to thirteenth aspects.

According to another aspect, there is provided a computer program or a computer readable medium (e.g., a non-transitory computer-readable medium) comprising instructions which, when executed by an apparatus 400, cause the apparatus 400 to perform at least the method A4 of any of the first to thirteenth aspects.

The blocks and related functions described above by means of FIGS. 2 and 3 are in no absolute chronological order, and some of them may be performed simultaneously or in an order differing from the described one. Other functions can also be executed between them or within them, and other information may be sent, and/or other rules applied. Some of the blocks or part of the blocks can also be left out or replaced by a corresponding block or part of the block.

FIG. 4 illustrates an example of an apparatus 400 comprising means for performing one or more of the example embodiments (e.g., the method A1, the method A2, the method A3, and/or the method A4) described above. For example, the apparatus 400 may be an apparatus such as, or comprising, or comprised in, a user device (i.e., UE) 100.

The apparatus 400 may comprise a circuitry or a chipset applicable for realizing one or more of the example embodiments described above. For example, the apparatus 400 may comprise at least one processor 410. The at least one processor 410 interprets instructions (e.g., computer program instructions) and processes data. The at least one processor 410 may comprise one or more programmable processors. The at least one processor 410 may comprise programmable hardware with embedded firmware and may, alternatively or additionally, comprise one or more application-specific integrated circuits (ASICs).

The at least one processor 410 is coupled to at least one memory 420. The at least one processor is configured to read and write data to and from the at least one memory 420. The at least one memory 420 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 420 stores computer readable instructions that are executed by the at least one processor 410 to perform one or more of the example embodiments described above. For example, non-volatile memory stores the computer readable instructions, and the at least one processor 410 executes the instructions using volatile memory for temporary storage of data and/or instructions. The computer readable instructions may refer to computer program code.

The computer readable instructions may have been pre-stored to the at least one memory 420 or, alternatively or additionally, they may be received, by the apparatus, via an electromagnetic carrier signal and/or may be copied from a physical entity such as a computer program product. Execution of the computer readable instructions by the at least one processor 410 causes the apparatus 400 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 400 may further comprise, or be connected to, an input unit 430. The input unit 430 may comprise one or more interfaces for receiving input. The one or more interfaces may comprise, for example, at least one of: one or more temperature, motion and/or orientation sensors, one or more cameras, one or more accelerometers, one or more microphones, one or more buttons and/or one or more touch detection units. Further, the input unit 430 may comprise an interface to which external devices may connect to.

The apparatus 400 may also comprise an output unit 440. The output unit may comprise or be connected to one or more displays capable of rendering visual content, such as a light emitting diode (LED) display, a liquid crystal display (LCD) and/or a liquid crystal on silicon (LCoS) display. The output unit 440 may further comprise one or more audio outputs. The one or more audio outputs may be for example loudspeakers.

The apparatus 400 further comprises a connectivity unit 450. The connectivity unit 450 enables wireless connectivity to one or more external devices. The connectivity unit 450 comprises at least one transmitter and at least one receiver that may be integrated to the apparatus 400 or that the apparatus 400 may be connected to. The at least one transmitter comprises at least one transmission antenna, and the at least one receiver comprises at least one receiving antenna. The connectivity unit 450 may comprise an integrated circuit or a set of integrated circuits that provide the wireless communication capability for the apparatus 400. Alternatively, the wireless connectivity may be a hardwired application-specific integrated circuit (ASIC). The connectivity unit 450 may also provide means for performing at least some of the blocks or functions of one or more example embodiments described above. The connectivity unit 450 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 400 may further comprise various components not illustrated in FIG. 4. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be understood by a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (400) comprising at least one processor (410), and at least one memory (420) storing instructions that, when executed by the at least one processor (410), cause the apparatus (400) at least to:
determine whether one or more conditions are fulfilled for skipping reading of one or more mobility-related system information broadcast messages on an earth-moving cell (121) of a non-terrestrial network,
wherein the one or more conditions comprise at least one of:
the apparatus (400) being stationary, or
the apparatus (400) being away from a border of the earth-moving cell (121); and
based on determining whether the one or more conditions are fulfilled, determine whether to skip the reading of the one or more mobility-related system information broadcast messages on the earth-moving cell (121) of the non-terrestrial network.

2. The apparatus (400) of claim 1, further being caused to:
skip the reading of the one or more mobility-related system information broadcast messages on the earth-moving cell (121) of the non-terrestrial network, based on determining that the one or more conditions are fulfilled.

3. The apparatus (400) of claim 2, wherein the reading of the one or more mobility-related system information broadcast messages is skipped regardless of whether a corresponding previously read mobility-related system information broadcast message is valid.

4. The apparatus (400) of claim 1, further being caused to:
read the one or more mobility-related system information broadcast messages on the earth-moving cell (121) of the non-terrestrial network, based on determining that the one or more conditions are not fulfilled.

5. The apparatus (400) of any preceding claim, wherein the border of the earth-moving cell (121) comprises a trailing part (150) of the border that is opposite to a movement direction (160) of a satellite providing the earth-moving cell (121).

6. The apparatus (400) of any preceding claim, further being caused to:
determine, based on a distance threshold, whether the apparatus (400) is away from the border of the earth-moving cell (121),
wherein the distance threshold is relative to the border of the earth-moving cell (121), such that the apparatus (400) is considered to be away from the border of the earth-moving cell (121) if a distance between the apparatus (400) and the border of the earth-moving cell (121) is higher than or equal to the distance threshold.

7. The apparatus (400) of any of claims 1 to 5, further being caused to:
determine, based on a distance threshold, whether the apparatus (400) is away from the border of the earth-moving cell (121),
wherein the distance threshold is relative to a reference point in the earth-moving cell (121), such that the apparatus (400) is considered to be away from the border of the earth-moving cell (121) if a distance between the apparatus (400) and the reference point is less than or equal to the distance threshold.

8. The apparatus (400) of claim 6 or 7, further being caused to:
determine the distance threshold based at least on a speed and a direction of the apparatus (400).

9. The apparatus (400) of any of claims 1 to 5, further being caused to:
determine, based on a time threshold, whether the apparatus (400) is away from the border of the earth-moving cell (121),
wherein the time threshold is relative to the apparatus (400) crossing the border of the earth-moving cell (121), such that the apparatus (400) is considered to be away from the border of the earth-moving cell (121) if an expected time duration until the apparatus (400) crosses the border of the earth-moving cell (121) is higher than the time threshold.

10. The apparatus (400) of claim 9, further being caused to:
determine the expected time duration until the apparatus (400) crosses the border of the earth-moving cell (121),
wherein the expected time duration is determined based at least on a speed of the apparatus (400) towards the border of the earth-moving cell (121), and a distance between the apparatus (400) and the border of the earth-moving cell (121).

11. The apparatus (400) of any preceding claim, further being caused to:
receive, from a network device (106) associated with the earth-moving cell (121), an indication indicating to read at least one of: intra-frequency cell re-selection information related to a neighbor cell (122), inter-frequency cell re-selection information related to the neighbor cell (122), or inter-radio-access-technology cell re-selection information related to the neighbor cell (122); and
read, based on the indication, the at least one of: the intra-frequency cell re-selection information related to the neighbor cell (122), the inter-frequency cell re-selection information related to the neighbor cell (122), or the inter-radio-access-technology cell re-selection information related to the neighbor cell (122).

12. The apparatus (400) of any preceding claim, wherein the one or more mobility-related system information broadcast messages comprise at least one of:
a system information block type 2,
a system information block type 3,
a system information block type 4, or
a system information block type 5.

13. The apparatus (400) of any preceding claim, wherein the apparatus (400) is a user device (100).

14. A method performed by an apparatus (400), the method comprising:
determining (201, 202, 301) whether one or more conditions are fulfilled for skipping reading of one or more mobility-related system information broadcast messages on an earth-moving cell (121) of a non-terrestrial network,
wherein the one or more conditions comprise at least one of:
the apparatus (400) being stationary, or
the apparatus (400) being away from a border of the earth-moving cell (121); and
based on determining whether the one or more conditions are fulfilled, determining (302) whether to skip the reading of the one or more mobility-related system information broadcast messages on the earth-moving cell (121) of the non-terrestrial network.

15. A computer program comprising instructions which, when executed by an apparatus (400), cause the apparatus (400) to perform at least the following:
determining whether one or more conditions are fulfilled for skipping reading of one or more mobility-related system information broadcast messages on an earth-moving cell (121) of a non-terrestrial network,
wherein the one or more conditions comprise at least one of:
the apparatus (400) being stationary, or
the apparatus (400) being away from a border of the earth-moving cell (121); and
based on determining whether the one or more conditions are fulfilled, determining whether to skip the reading of the one or more mobility-related system information broadcast messages on the earth-moving cell (121) of the non-terrestrial network.
